# EUROPÄISCHE PATENTSCHRIFT

(11) **EP 2 229 230 B1**
(45) Veröffentlichungstag und Bekanntmachung des Hinweises auf die Patenterteilung: **21.03.2012**
(21) Anmeldenummer: 08864460.4
(22) Anmeldetag: 02.12.2008
(51) Int. Cl.: B01D 25/19

(54) **FILTERPRESSE**
FILTER PRESS
FILTRE-PRESSE

(30) Priorität: 20.12.2007 AT 20822007
(43) Veröffentlichungstag der Anmeldung: 22.09.2010
(73) Patentinhaber: Andritz Technology and Asset Management GmbH, 8045 Graz (AT)
(72) Erfinder: PASCHEDAG, Thomas, 95182 Döhlau (DE); BÖHME, Marion, 40595 Düsseldorf (DE)
(74) Vertreter: Schweinzer, Friedrich
(86) Internationale Anmeldenummer: PCT/AT2008/000427
(87) Internationale Veröffentlichungsnummer: WO 2009/079673

(56) Entgegenhaltungen:
- DE-A1- 3 245 210
- GB-A- 407 782
- GB-A- 681 560
- US-A- 4 756 817
- US-A- 5 846 415

## Beschreibung

Die Erfindung betrifft eine Filterpresse mit einem Pressengestell für eine entlang der Längsachse des Pressengestells bewegliche Lagerung von quer zur Längsachse des Pressengestells orientierten und miteinander verbundenen Filterplatten, wobei eine mittels einer Druck- oder zugeinrichtung entlang der Längsachse des Pressengestells bewegbare Druckplatte vorgesehen ist, die die Filterplatten während des Filtriervorganges aneinander presst, wobei die Druck- oder Zugeinrichtung auf einem Schlitten angeordnet ist, gemäß dem Oberbegriff von Anspruch 1.

Filterpressen dieser Art, wie sie z.B. in der US 4,756,817 beschrieben sind, dienen dazu, aus einer zu filtrierenden Suspension Feststoffe von der flüssigen Phase abzutrennen. Dieser Filtrationsprozess findet in den Filterplatten statt, wobei mehrere Filterplatten zu einem Filterplattenpaket aneinandergefügt sind. Mithilfe eines Schließzylinders, üblicher Weise ein hydraulischer Schließzylinder, wird Druck auf das Filterplattenpaket ausgeübt, um die erforderliche Dichtheit zwischen den einzelnen Filterplatten sicher zu stellen. Jede der Filterplatten weist eine Filterfläche auf, die mit einem Filtertuch abgedeckt ist, wobei die zu filtrierende Suspension in die zwischen zwei Filterplatten gebildete Filterkammer und gegen das Filtertuch gepresst wird. Das zwischen Filtertuch und Filterfläche befindliche Filtrat wird in weiterer Folge abgeführt, und der Filterkuchen verbleibt in der Filterkammer. Durch Trennung der Filterplatten voneinander fällt der Filterkuchen ab.

In manchen Anwendungen, etwa im Bergbau, bestehen dabei sehr kurze Zykluszeiten, d.h., dass das Schließen des Filterplattenpakets, das Befüllen mit der zu filtrierenden Suspension, die Filtration selbst, das Öffnen des filterplattenpaketes, der Abwurf des Filterkuchens und das Waschen der Filtertücher verhältnismäßig rasch ablaufen muss, oft innerhalb weniger Minuten. Ein verzögernder Faktor ist dabei das Öffnen und Schließen des Filterplattenpakets. Zur Beschleunigung dieses Vorganges werden die Filterplatten etwa über Ketten miteinander verbunden, sodass durch Bewegen der äußersten Filterplatte das gesamte Filterplattenpaket auseinander gezogen wird, und der gesamte Filterkuchen abfallen kann. Gegenüber einer Verschiebung von einer Filterplatte nach der anderen erfordert diese Vorgangsweise aber einen größeren Bewegungsweg der Filterplatten. Gemäß dem Stand der Technik wird etwa der Schließzylinder auch für das Auseinanderziehen des Filterplattenpakets verwendet, was aber mit Nachteilen verbunden ist. So wird durch Verwendung des Schließzylinders das Pressenvolumen begrenzt, weil nur ein limitierter Zylinderhub verwirklichbar ist. Ein langer Zylinderhub bedingt des Weiteren große Ölmengen, und setzt die Kolbenstange des Schließzylinders über weite Teile den Verschmutzungen durch abfallenden Filterkuchen aus. Außerdem ergeben sich auch Nachteile bei Querkräften und anderen, ungünstigen Belastungen von Kolbenstange sowie des Kolbens und der entsprechenden Dichtungen. Schließlich nimmt das Öffnen und Schließen des Filterplattenpakets mithilfe des Schließzylinders geraume Zeit in Anspruch, da der Schließzylinder für einen hohen Schließdruck ausgelegt ist, aber nicht für rasche Kolbenbewegungen.

Daher wurde auch versucht, zusätzliche hydraulische Antriebe für das Öffnen und schließen des Filterplattenpakets vorzusehen, die für langen und raschen Zylinderhub ausgelegt sind. Die entsprechend dünnen Kolbenstangen verursachen aber wiederum Probleme durch geringe mechanische Belastbarkeit, zudem ist oft die Verwendung mehrerer solcher hydraulischer Zusatzantriebe notwendig, die aber exakt angesteuert werden müssen, um synchrone Bewegungen sicher zu stellen. Schließlich lösen auch diese Systeme nicht das Problem langer Kolbenstangen und deren Verschmutzung durch abfallenden Filterkuchen.

Die DE 32 45 210 A1 zeigt nun eine Filterpresse mit zwei beweglichen Köpfen, wodurch sich kürzere Hübe als bisher ergeben. Auf einen der Köpfe wird dabei Druck ausgeübt, während der andere Kopf durch Anschläge gehalten wird. Bei dieser Ausführung besteht der Nachteil, dass es schwierig ist, das Filtrat abzuführen sowie einen ausreichenden Schließdruck aufzubauen.

Es ist daher das Ziel der Erfindung, diese Nachteile zu vermeiden und eine Filterpresse zu verwirklichen, die einerseits den notwendigen Schließdruck für das Filterplattenpaket bereitstellt, andererseits aber auch ein rasches Öffnen und Schließen des Filterplattenpakets ermöglicht. Des Weiteren soll die erfindungsgemäße Filterpresse verbesserten Schutz vor Verschmutzung für mechanische Komponenten wie den Schließzylinder, oder der Einrichtungen für das Öffnen und Schließen des Filterplattenpakets bieten.

Diese Ziele werden durch die Merkmale von Anspruch 1 erreicht. Anspruch 1 bezieht sich auf eine Filterpresse mit einem Seitenholme aufweisenden Pressengestell für eine entlang der Längsachse der Seitenholme bewegliche Lagerung von quer zur Längsachse der Seitenholme orientierten und miteinander verbundenen Filterplatten, wobei eine mittels einer Druck- oder zugeinrichtung entlang der Längsachse der Seitenholme bewegbare Druckplatte vorgesehen ist, die die Filterplatten während des Filtriervorganges aneinander presst wobei die Druck- oder zugeinrichtung auf einem Schlitten angeordnet ist. Erfindungsgemäß wird vorgeschlagen, dass die Druck- oder Zugeinrichtung auf einem Schlitten angeordnet ist, der auf den Seitenholmen mittels einer auf dem Schlitten angeordneten Antriebseinheit entlang der Längsachse der Seitenholme), die in ihrem Endbereich ein Kopfstück aufweisen, zwischen einer äußeren, vom Kopfstück am weitesten entfernten Position und einer innersten, dem Kopfstück nahen Position, bewegbar ist. Bei eingesetzten Filterplatten kann die der Druckplatte nächstgelegene Filterplatte mit der Druckplatte verbunden werden, und durch die Bewegung des Schlittens die Filterplatten auseinander, oder aufeinander zu bewegt werden. Durch das Merkmal des separaten Schlittens wird somit der kinematische Vorgang des Aneinanderpressens der Filterplatten durch die Druck- oder Zugeinrichtung von jenem des Öffnens und Schließens des Filterplattenpakets entkoppelt. Durch die auf dem Schlitten angeordnete Antriebseinheit werden Verschmutzungen von mechanischen Komponenten wie der Druck- oder Zugeinrichtung, oder der Antriebseinheit selbst vermieden, wobei das feststehende Kopfstück eine einfache Ableitung des Filtrates über Rohrleitungen, die durch das Kopfstück geführt sind, ermöglicht.

Die Antriebseinheit kann auf unterschiedliche Weise ausgeführt werden. Anspruch 2 sieht etwa vor, dass die Antriebseinheit zumindest ein Zahnrad umfasst, das mit einer auf den Seitenholmen angeordneten Zahnstange kämmt. Das stellt eine einfache mechanische Lösung für die Antriebseinheit dar, die außerdem hohe Geschwindigkeiten für den Schlitten ermöglicht. Sind gemäß Anspruch 3 die Zähne der Zahnstange abwärts orientiert, können durch diese Orientierung der Zahnstange Verschmutzungen des Zahnstangengetriebes durch abfallenden Filterkuchen reduziert werden.

Anspruch 4 sieht vor, dass die Druck- oder Zugeinrichtung einen Hydraulikantrieb mit einem Hydraulikzylinder umfasst, wobei sowohl der Hydraulikantrieb, als auch der Hydraulikzylinder auf dem Schlitten angeordnet sind. Dadurch können Versorgungseinrichtungen, wie etwa Hydraulikleitungen, für die Druck- oder Zugeinrichtung kurz gehalten werden.

Gemäß Anspruch 5 ist vorgesehen, dass der Schlitten zumindest einen Verriegelungszylinder aufweist, der mit einer Ausnehmung des Pressengestells im Nahebereich des geschlossenen Filterplattenpakets zusammen wirkt. Der zumindest eine Verriegelungszylinder stützt somit den Schlitten an den Seitenholmen des Pressengestells ab, wenn die Druck- oder Zugeinrichtung die Druckplatte bewegt, um die Filterplatten aneinander zu pressen. Hierbei kann gemäß Anspruch 6 im Nahebereich des geschlossenen Filterplattenpakets ein Anschlag vorgesehen sein, der eine genaue Positionierung des Schlittens sicherstellt, um die Verriegelungszylinder mit Ausnehmungen in den Seitenholmen zu justieren.

Anspruch 7 sieht vor, dass Ausnehmungen in den Seitenholmen vorgesehen sind, wobei der Schlitten mit seitlichen Andrückrollen versehen ist, die an der dem Schlitten abgewandten Seite der Seitenholme abrollen. Die seitlichen Andrückrollen verhindern dabei ein Ausbeulen der Seitenholme beim Ausfahren der Verriegelungszylinder. Ergänzend können auch zusätzliche Andrückrollen vorgesehen sein, die an der dem Schlitten zugewandten Seite der Seitenholme abrollen, um ein Einbeulen der Seitenholme beim Einfahren der Verriegelungszylinder zu verhindern.

Gemäß Anspruch 8 wird vorgeschlagen, dass in einer Anfangsposition des Schlittens im Nahebereich des geschlossenen Filterplattenpakets, sowie in einer Endposition des Schlittens bei geöffnetem Filterplattenpaket Näherungsschalter angeordnet sind. Die Näherungsschalter detektieren die Position des Schlittens und steuern eine Beschleunigung bzw. ein Abbremsen des Schlittens. Dadurch kann die Bewegung des Schlittens optimiert werden.

Die Erfindung wird Im Folgenden anhand eines Ausführungsbeispiels mithilfe der beiliegenden Figuren näher erläutert. Hierbei zeigen die
Fig. 1 eine perspektivische Ansicht einer Ausführungsform einer erfindungsgemäßen Filterpresse ohne eingesetzte Filterplatten,
Fig. 2 eine perspektivische Ansicht des Schlittens von der der Druckplatte abgewandten Seite aus gesehen,
Fig. 3 eine Seitenansicht des Schlittens,
Fig. 4 eine Seitenansicht der Ausführungsform einer erfindungsgemäßen Filterpresse gemäß Fig. 1 während des Filtrationsvorganges,
Fig. 5 eine Seitenansicht der Ausführungsform einer erfindungsgemäßen Filterpresse gemäß Fig. 1 während der Schnellentleerung, und
Fig. 6 die Ausführungsform einer erfindungsgemäßen Filterpresse gemäß Fig. 1 von oben gesehen (ohne Filterplatten).

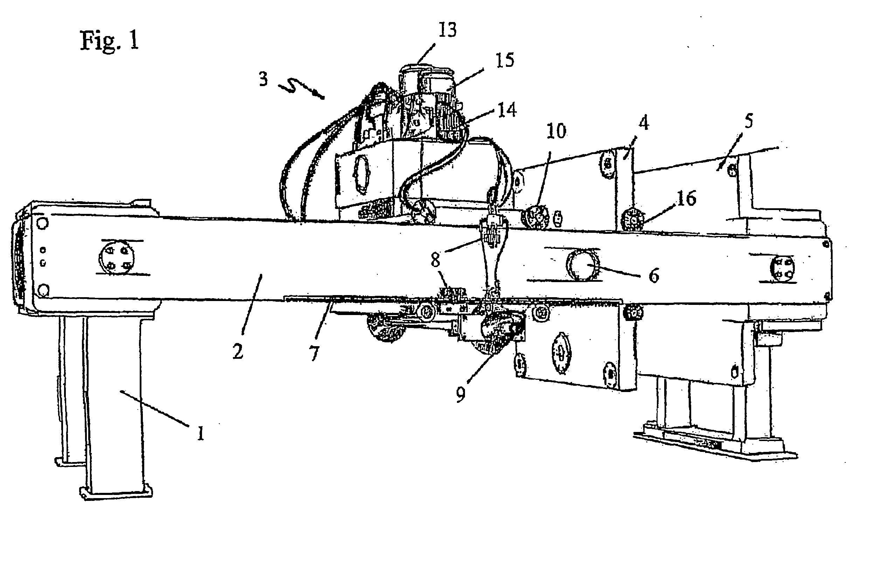

In der Fig. 1 ist eine perspektivische Ansicht einer Ausführungsform einer erfindungsgemäßen Filterpresse mit einem Pressengestell gezeigt, das Endständer 1, Seitenholme 2, sowie in einem Endbereich der Seitenholme 2 ein Kopfstück 5 aufweist, wobei das Kopfstück 5 insbesondere zur Aufnahme der bei der Manipulation des Filterplattenpakets 18 entstehenden Druck- und Zugkräfte dient. Auf den Seitenholmen 2 ist des Weiteren eine Druckplatte 4 mithilfe von Stützrollen 16 entlang der Längsachse der Seitenholme 2 bewegbar gelagert. Zwischen der Druckplatte 4 und dem Kopfstück 5 befindet sich das Filterplattenpaket 18, das in den Fig. 1-3 und der Fig. 6 nicht eingezeichnet ist. Die für die Filtration notwendigen Zuleitungen für die zu filtrierende Suspension, sowie das abzuführende Filtrat werden durch das Kopfstück 5 geführt.

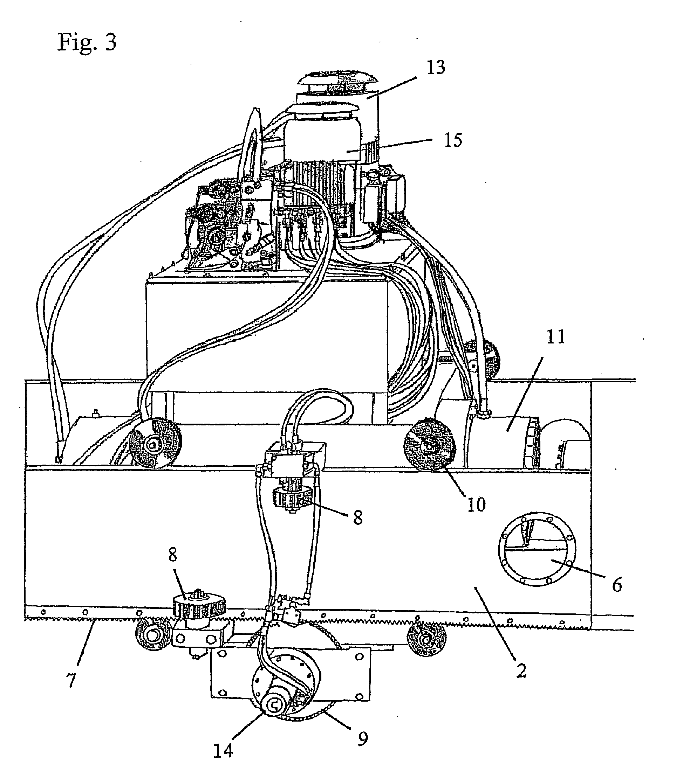

Auf den Seitenholmen 2 ist des Weiteren erfindungsgemäß ein Schlitten 3 mithilfe von Führungsrollen 10 geführt. Der Schlitten 3 ist mithilfe einer auf dem Schlitten 3 angeordneten Antriebseinheit entlang der Längsachse der Seitenholme 2 bewegbar. Die Antriebseinheit umfasst im vorliegenden Ausführungsbeispiel zumindest ein Zahnrad 9, das mit zumindest einer auf den Seitenholmen 2 angeordneten Zahnstange 7 kämmt (siehe auch Fig. 3, Fig. 4 und Fig. 5). Die Ansteuerung des Zahnrads 9 erfolgt etwa über einen Hydraulikmotor 14, der ebenfalls auf dem Schlitten 3 angeordnet ist. Mit dieser einfachen Anordnung sind hohe Geschwindigkeiten des Schlittens 3 möglich.

Auf dem Schlitten 3 befindet sich ferner eine Druck- oder Zugeinrichtung, die im vorliegenden Fall durch einen hydraulischen Schließzylinder 11, sowie einen hydraulischen Antrieb 13 gebildet wird. Der entsprechende, hydraulische Antrieb 13 ist ebenfalls auf dem Schlitten 3 angeordnet, sodass die Leitungswege sehr kurz gehalten werden können. Das verringert das Risiko von Leckagen, und vermeidet die Zuführung langer Leitungen von externen hydraulischen Antrieben. In der Fig. 1 sind des Weiteren ein erster Motor 15A für große Ölmengen und entsprechend kleinerem Druck, sowie ein zweiter Motor 15B für kleinere Ölmengen und größerem Druck zu sehen. Der erste Motor 15A wird zur Verriegelung, wie noch näher ausgeführt werden wird, sowie für geringeren Schließdruck des Schließzylinders verwendet, und der zweite Motor 15B zum Aufbau von hohem Schließdruck des Schließzylinders, wie er während der Filtration notwendig ist.

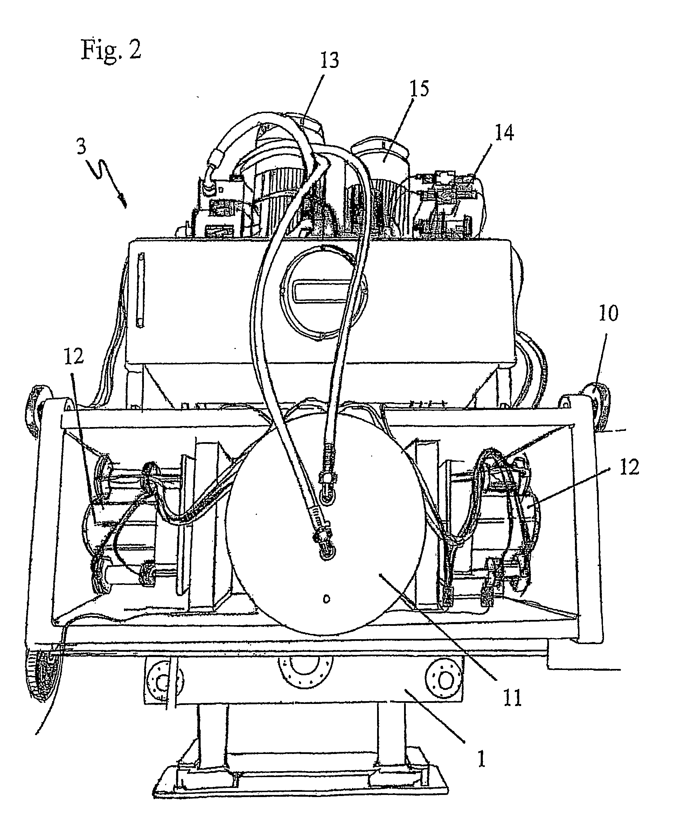

In den Seitenholmen 2 sind Ausnehmungen 6 im Nahebereich des geschlossenen Filterplattenpakets vorgesehen, die mit den Kolben von beidseitig auf dem Schlitten 3 angeordneten Verriegelungszylindern 12 zusammenwirken (siehe auch Fig. 2). Die Verriegelungszylinder 12 werden über eine Verriegelungshydraulik angesteuert, und stützen den Schlitten 3 an den Seitenholmen 2 des Pressengestells ab, wenn die Druck- oder Zugeinrichtung die Druckplatte 4 bewegt, um die Filterplatten 17 aneinander zu pressen. Die Ausnehmungen 6 können dabei etwa in Form von Bronzebuchsen ausgeführt sein, die in den Seitenholmen 2 eingesetzt sind.

Im Nahebereich des geschlossenen Filterplattenpakets 18 kann des Weiteren ein Anschlag vorgesehen sein (in den Fig. 1-6 nicht ersichtlich), der eine genaue Positionierung des Schlittens 3 sicherstellt, um die Verriegelungszylinder 12 mit den Ausnehmungen 6 der Seitenholme 2 auszurichten. Die Kolbenstangen der Verriegelungszylinder 12 können somit passgenau in die Ausnehmungen 6 eingreifen. Der Schlitten 3 kann ferner mit seitlichen Andrückrollen 8 versehen sein, die an der dem Schlitten 3 abgewandten Seite der Seitenholme 2 abrollen, und ein Ausbeulen der Seitenholme 2 beim Ausfahren der Verriegelungszylinder 12 bewirken.

Die Bewegung des Schlittens 3 kann weiters mithilfe von Näherungsschaltern optimiert werden. Die Näherungsschalter sind dabei in einer Anfangsposition des Schlittens 3 im Nahebereich des geschlossenen Filterplattenpakets 18, sowie in einer Endposition des Schlittens 3 bei geöffnetem Filterplattenpaket 18 angeordnet, und bewirken bei Detektierung des Schlittens 3 eine Abbremsung bzw. eine Beschleunigung des Schlittens 3.

Die Funktionsweise der erfindungsgemäßen Filterpresse ist nun wie folgt:

Der Schlittens 3 befindet sich zunächst in einer äußeren, vom Kopfstück 5 am weitesten entfernten Position, der Anfangsposition, und setzt ein Steuersignal zur Beschleunigung des Schlittens 3 über den Hydraulikmotor 14. Der Schlitten 3 bewegt sich nun auf das Kopfstück 5 zu, und schließt dabei das Filterplattenpaket 18. Ein Näherungsschalter detektiert schließlich die Position des Schlittens 3 in einer innersten, dem Kopfstück 5 nahen Position, der Endposition, und setzt ein Steuersignal zur Abbremsung des Schlittens 3 über den Hydraulikmotor 14.

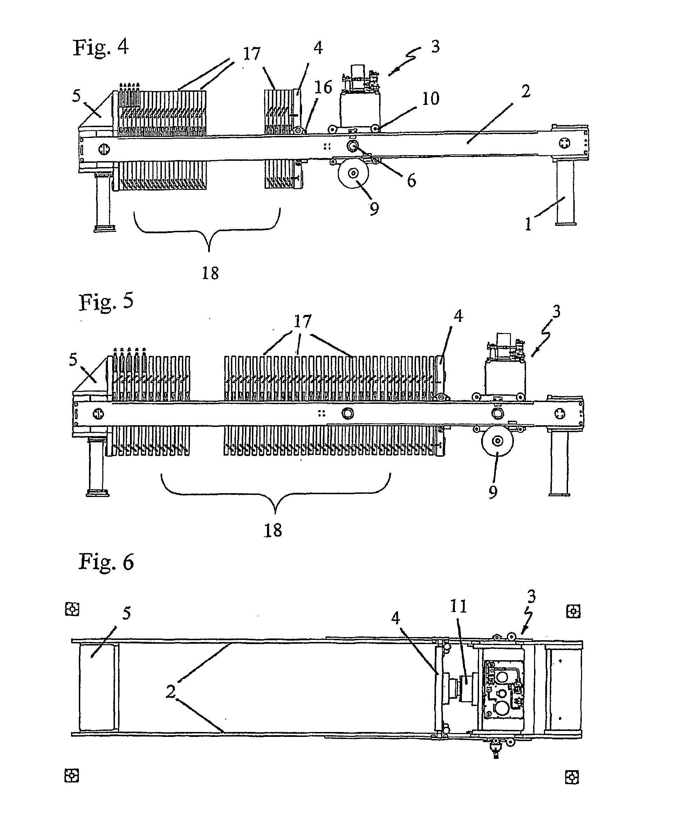

Über einen Anschlag wird der Schlitten 3 in seiner Endposition präzise positioniert. Ein Steuersignal an die Verriegelungshydraulik bewirkt in weiterer Folge das Ausfahren der Kolbenstangen der Verriegelungszylinder 12, sodass deren Kolbenstangen in die Ausnehmungen 6 eingreifen. Ein weiteres Steuersignal an den hydraulischen Antrieb 13 aktiviert das Ausfahren des Kolbens des Hydraulikzylinders 11, um über die Druckplatte 4 einen Schließdruck auf das geschlossene Filterplattenpaket 18 auszuüben (Fig. 4). Das Filterplattenpaket 18 ist nun für eine Filtration bereit. Während der Filtration wird das Filtrat über Rohrleitungen, die durch das Kopfstück 5 geführt sind, abgeleitet, und zwischen den Filterplatten 17 baut sich ein Filterkuchen auf, der in weiterer Folge zu entfernen ist.

Um nach Abschluss der Filtration den Filterkuchen zu entfernen, ist nun das Filterplattenpaket 18 auseinander zu ziehen. Hierzu bewirkt ein Steuersignal an den hydraulischen Antrieb 13 zunächst das Einfahren des Kolbens des Hydraulikzylinders 11, um den Schließdruck auf das Filterplattenpaket 18 zu reduzieren. Der Hubweg ist dabei gering, etwa im Bereich von 500mm, sodass dieser Vorgang nur wenig Zeit in Anspruch nimmt. Ein weiteres Steuersignal an die Verriegelungshydraulik bewirkt in weiterer Folge das Einfahren der Kolbenstangen der Verriegelungszylinder 12, sodass die Ausnehmungen 6 freigegeben werden. Ein entsprechendes Steuersignal an den Hydraulikmotor 14 aktiviert die Antriebseinheit des Schlittens 3, sodass über die Zahnräder 9 und die Zahnstange 7 der Schlitten 3 vom Kopfstück 5 entfernt wird. Die der Druckplatte 4 zugewandte, äußerste Filterplatte 17 des Filterplattenpakets 18 ist mit der Druckplatte 4 verbunden, und alle anderen Filterplatten 17 sind z.B. über Ketten mit dieser äußersten Filterplatte 17 verbunden. Die Bewegung des Schlittens 3 bewirkt somit das Auseinanderziehen der Filterplatten 17 des Filterplattenpaketes 18, und der Filterkuchen fällt schwerkraftbedingt zu Boden (Fig. 5, Fig. 6).

Ein weiterer Näherungsschalter detektiert schließlich die Position des Schlittens 3 in seiner äußeren, vom Kopfstück 5 am weitesten entfernten Position, der ursprünglichen Anfangsposition, und setzt ein Steuersignal zur Abbremsung des Schlittens 3 über den Hydraulikmotor 14. Nach Stillstand des Schlittens 3 und Abfallen des Filterkuchens ist die erfindungsgemäße Filterpresse für einen neuerlichen Zyklus bereit.

Die erfindungsgemäße Filterpresse stellt somit einerseits den notwendigen Schließdruck für das Filterplattenpaket 18 bereit, ermöglicht aber andererseits auch ein rasches Öffnen und Schließen des Filterplattenpakets 18. Des Weiteren ist durch die Anordnung des hydraulischen Antriebes 13 und des Hydraulikzylinders 11, der Verriegelungshydraulik 15 für die Verrieglungszylinder 12, sowie des Hydraulikmotors 14 Schutz vor Verschmutzung gegeben. Des Weiteren können die wesentlichen Leitungen für diese Hydraulikeinheiten kurz gehalten werden.

## Patentansprüche

1. Filterpresse mit einem Seitenholme (2) aufweisenden Pressengestell für eine entlang der Längsachse der Seitenholme (2) bewegliche Lagerung von quer zur Längsachse der Seitenholme (2) orientierten und miteinander verbundenen Filterplatten (17), wobei eine mittels einer Druck- oder Zugeinrichtung entlang der Längsachse der Seitenholme (2) bewegbare Druckplatte (4) vorgesehen ist, die die Filterplatten (17) während des Filtriervorganges aneinander presst, wobei die Druck- oder Zugeinrichtung auf einem Schlitten (3) angeordnet ist, **dadurch gekennzeichnet, dass** der Schlitten (3)auf den Seitenholmen (2) mittels einer auf dem Schlitten (3) angeordneten Antriebseinheit entlang der Längsachse der Seitenholme (2), die in ihrem Endbereich ein Kopfstück (5) aufweisen, zwischen einer äußeren, vom Kopfstück (5) am weitesten entfernten Position und einer innersten, dem Kopfstück (5) nahen Position, bewegbar ist.

2. Filterpresse nach Anspruch 1, **dadurch gekennzeichnet, dass** die Antriebseinheit zumindest ein Zahnrad (9) umfasst, das mit zumindest einer auf den Seitenholmen (2) angeordneten Zahnstange (7) kämmt.

3. Filterpresse nach Anspruch 2, **dadurch gekennzeichnet, dass** die Zähne der Zahnstange (7) abwärts orientiert sind.

4. Filterpresse nach einem der Ansprüche 1 bis 3, **dadurch gekennzeichnet, dass** die Druck- oder Zugeinrichtung einen Hydraulikantrieb (13) mit einem Hydraulikzylinder (11) aufweist, wobei sowohl der Hydraulikantrieb (13), als auch der Hydraulikzylinder (11) auf dem Schlitten (3) angeordnet sind.

5. Filterpresse nach einem der Ansprüche 1 bis 4, **dadurch gekennzeichnet, dass** der Schlitten (3) zumindest einen Verriegelungszylinder (12) aufweist, der mit einer Ausnehmung (6) der Seitenholme (2) im Nahebereich des geschlossenen Filterplattenpakets (18) zusammen wirkt.

6. Filterpresse nach Anspruch 5, **dadurch gekennzeichnet, dass** im Nahebereich des geschlossenen Filterplattenpakets (18) ein Anschlag vorgesehen ist.

7. Filterpresse nach Anspruch 5 oder 6, **dadurch gekennzeichnet, dass** der Schlitten (3) mit seitlichen Andrückrollen (8) versehen ist, die an der dem Schlitten (3) abgewandten Seite der Seitenholme (2) abrollen.

8. Filterpresse nach einem der Ansprüche 1 bis 7, **dadurch gekennzeichnet, dass** in einer Anfangsposition des Schlittens (3) bei geöffnetem Filterplattenpaket, sowie in einer Endposition des Schlittens (3) im Nahebereich des geschlossenen Filterplattenpakets (18) Näherungsschalter angeordnet sind.

## Claims

1. Filter press with press frame containing side beams (2) to support filter plates (17) movably along the longitudinal axis of the side beams (2), where the filter plates (17) are oriented at right angles to the longitudinal axis of the side beams (2) and connected to one another, and where a pressure plate (4) is provided that can be moved along the longitudinal axis of the side beams (2) by means of a pushing or pulling device, and which presses the filter plates (17) against one another during the filtration process, where the pushing or pulling device is mounted on a sliding carriage (3), **characterised by** the sliding carriage (3) being movable on the side beams (2) between an outer position that is farthest away from the header (5) and an inner position that is close to the header (5), by means of a drive unit mounted on the sliding carriage (3), along the longitudinal axis of the side beams (2), which have a header (5) in their final section.

2. Filter press according to Claim 1, **characterised by** the drive unit comprising at least one gear wheel (9) that meshes with at least one toothed rack (7) mounted on the side beams (2).

3. Filter press according to Claim 2, **characterised by** the teeth of the toothed rack (7) facing downward.

4. Filter press according to one of Claims 1 to 3, **characterised by** the pushing or pulling device having a hydraulic drive (13) with a hydraulic cylinder (11), where both the hydraulic drive (13) and the hydraulic cylinder (11) are mounted on the sliding carriage (3).

5. Filter press according to one of Claims 1 to 4, **characterised by** the sliding carriage (3) having at least one interlocking cylinder (12) that interacts with a recess (6) in the side beams (2) in the vicinity of the closed filter plate assembly (18).

6. Filter press according to Claim 5, **characterised by** a limit stop being provided in the vicinity of the closed filter plate assembly (18).

7. Filter press according to Claim 5 or 6, **characterised by** the sliding carriage (3) having lateral press rolls that roll along the side of the side beams (2) facing away from the sliding carriage (3).

8. Filter press according to one of Claims 1 to 7, **characterised by** proximity switches being mounted in a starting position of the sliding carriage (3) when the filter plate assembly is open and in a final position of the sliding carriage (3) in the vicinity of the closed filter plate assembly (18).

## Revendications

1. Filtre-presse comportant un cadre de presse avec poutres latérales (2) pour le support mobile, le long de l'axe longitudinal des poutres latérales (2), de plaques à filtre (17) orientées transversalement à l'axe longitudinal des poutres latérales (2) et reliées entre elles, où une plaque de pression (4) amovible le long de l'axe longitudinal des poutres latérales (2) moyennant un dispositif de pression ou de traction est prévue qui presse les plaques à filtre (17) l'une contre l'autre pendant le filtrage, le dispositif de pression ou de traction étant disposé sur un chariot (3), **caractérisé en ce que** le chariot (3) est amovible sur les poutres latérales (2) entre une position extérieure à distance maximum du butoir (5) et une position intérieure à proximité du butoir (5) moyennant une unité d'entraînement disposée sur le chariot (3) le long de l'axe longitudinal des poutres latérales (2), dont le bout comporte un butoir (5).

2. Filtre-presse selon la revendication 1, **caractérisé en ce que** l'unité d'entraînement comporte au moins une roue dentée (9) qui s'engrène dans au moins une crémaillère (7) disposée sur les poutres latérales (2).

3. Filtre-presse selon la revendication 2, **caractérisé en ce que** les dents de la crémaillère (7) s'orientent vers le bas.

4. Filtre-presse selon l'une des revendications 1 ou 3, **caractérisé en ce que** le dispositif de pression ou de traction comporte une commande hydraulique (13) avec vérin hydraulique (11), la commande hydraulique (13) ainsi que le vérin hydraulique (11) étant disposés sur le chariot (3).

5. Filtre-presse selon l'une des revendications 1 à 4, **caractérisé en ce que** le chariot (3) comporte au moins un vérin de serrage (12) qui interagit avec une échancrure (6) dans les poutres latérales (2) à proximité du paquet de plaques à filtre (18) fermé.

6. Filtre-presse selon la revendication 5, **caractérisé en ce qu'**un arrêt est prévu à proximité du paquet de plaques à filtre (18) fermé.

7. Filtre-presse selon la revendication 5 ou 6, **caractérisé en ce que** le chariot (3) est pourvu de galets-presseurs latéraux (8) qui roulent au côté des poutres latérales (2) à l'opposé du chariot (3).

8. Filtre-presse selon l'une des revendications 1 à 7, **caractérisé en ce que** des détecteurs de proximité se trouvent disposés à une position de début du chariot (3) à proximité du paquet de plaques à filtre ouvert et à une position finale du chariot (3) à proximité du paquet de plaques à filtre (18) fermé.
